(19) Europäisches Patentamt
European Patent Office
Office européen des brevets

(11) **EP 2 646 813 B1**

(12) **FASCICULE DE BREVET EUROPEEN**

(45) Date de publication et mention de la délivrance du brevet:
**27.08.2014 Bulletin 2014/35**

(21) Numéro de dépôt: **11805081.4**

(22) Date de dépôt: **02.12.2011**

(51) Int Cl.:
*B01D 59/42* (2006.01)        *G01N 27/447* (2006.01)
*H01J 49/10* (2006.01)        *G01N 30/88* (2006.01)
*B01D 59/44* (2006.01)

(86) Numéro de dépôt international:
**PCT/FR2011/052848**

(87) Numéro de publication internationale:
**WO 2012/072963 (07.06.2012 Gazette 2012/23)**

(54) **PROCEDE DE MESURE ISOTOPIQUE PAR ICPMS.**

VERFAHREN ZUR ISOTOPENMESSUNG MITTELS ICPMS

METHOD FOR ISOTOPIC MEASUREMENT BY ICPMS

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **03.12.2010  FR 1060049**

(43) Date de publication de la demande:
**09.10.2013  Bulletin 2013/41**

(73) Titulaire: **Commissariat à l'Énergie Atomique et aux Énergies Alternatives**
**75015 Paris (FR)**

(72) Inventeurs:
• **CHARTIER, Frédéric**
  **F-92260 Fontenay-aux-Roses (FR)**
• **GEERTSEN, Valérie**
  **F-78000 Versailles (FR)**
• **VIO, Laurent**
  **F-01120 Dagneux (FR)**
• **CRÉTIER, Gérard**
  **F-01120 Dagneux (FR)**

(74) Mandataire: **Dennemeyer & Associates S.A.**
**Poccistrasse 11**
**80336 München (DE)**

(56) Documents cités:
• BARNES R M: "Capillary electrophoresis and inductively coupled plasma spectrometry: Status report", FRESENIUS' JOURNAL OF ANALYTICAL CHEMISTRY, vol. 361, no. 3, juin 1998 (1998-06), pages 246-251, XP055000833, ISSN: 0937-0633

• MICHALKE B: "Capillary electrophoresis-inductively coupled plasma-mass spectrometry: A report on technical principles and problem solutions, potential, and limitations of this technology as well as on examples of application", ELECTROPHORESIS, vol. 26, no. 7-8, avril 2005 (2005-04), pages 1584-1597, XP055000834, ISSN: 0173-0835

• HIROKAWA T ET AL: "Preparative procedures in isotachophoresis", JOURNAL OF CHROMATOGRAPHY, vol. 658, no. 2, 14 janvier 1994 (1994-01-14), pages 343-354, XP026531452, ELSEVIER SCIENCE PUBLISHERS B.V, NL ISSN: 0021-9673, DOI: 10.1016/0021-9673(94)80024-3 [extrait le 1994-01-14]

• MAZEREEUW M ET AL: "In-line isotachophoretic focusing of very large injection volumes for capillary zone electrophoresis using a hydrodynamic counterflow", JOURNAL OF CHROMATOGRAPHY, vol. 677, no. 1, 12 août 1994 (1994-08-12) , pages 151-157, XP026531670, ELSEVIER SCIENCE PUBLISHERS B.V, NL ISSN: 0021-9673, DOI: 10.1016/0021-9673(94)80554-7 [extrait le 1994-08-12]

• QI JUN SONG ET AL: "Interfacing a microfluidic electrophoresis chip with inductively coupled plasma mass spectrometry for rapid elemental speciation", JOURNAL OF ANALYTICAL ATOMIC SPECTROMETRY, vol. 19, no. 7, 17 juin 2004 (2004-06-17), pages 883-887, XP055000837, ISSN: 0267-9477, DOI: 10.1039/b401657b

- PITOIS ET AL: "Determination of fission products in nuclear samples by capillary electrophoresis-inductively coupled plasma mass spectrometry (CE-ICP-MS)", INTERNATIONAL JOURNAL OF MASS SPECTROMETRY, vol. 270, no. 3, 23 décembre 2007 (2007-12-23), pages 118-126, XP022459134, ELSEVIER SCIENCE PUBLISHERS, AMSTERDAM, NL ISSN: 1387-3806, DOI: 10.1016/J.IJMS.2007.11.012
- IGNACIO GARCIA ALONSO J ET AL: "Determination of fission products and actinides in spent nuclear fuels by isotope dilution ion chromatography inductively coupled plasma mass spectrometry", JOURNAL OF ANALYTICAL ATOMIC SPECTROMETRY, vol. 10, no. 5, 1 mai 1995 (1995-05-01), pages 381-393, XP009149393, NEW YORK,NY, US ISSN: 0267-9477, DOI: 10.1039/JA9951000381
- MAZEREEUW M ET AL: "On-line isotachophoretic sample focusing for loadability enhancement in capillary electrochromatography-mass spectrometry", JOURNAL OF CHROMATOGRAPHY, vol. 879, no. 2, 1 mai 2000 (2000-05-01), pages 219-233, XP004199157, ELSEVIER SCIENCE PUBLISHERS B.V, NL ISSN: 0021-9673, DOI: 10.1016/S0021-9673(00)00259-4
- UDSETH H R ET AL: "CAPILLARY ISOTACHOPHORESIS/MASS SPECTROMETRY", ANALYTICAL CHEMISTRY, AMERICAN CHEMICAL SOCIETY, US, vol. 61, no. 3, 1 février 1989 (1989-02-01), pages 228-232, XP000025111, ISSN: 0003-2700, DOI: 10.1021/AC00178A008
- G. V. KAIGALA ET AL: "Miniaturized system for isotachophoresis assays", LAB ON A CHIP, vol. 10, no. 17, 1 janvier 2010 (2010-01-01), page 2242, XP55018310, ISSN: 1473-0197, DOI: 10.1039/c004120c
- PETIT J ET AL: "Metal complexes stability constant determination by hyphenation of capillary electrophoresis with inductively coupled plasma mass spectrometry: The case of 1:1 metal-to-ligand stoichiometry", JOURNAL OF CHROMATOGRAPHY, ELSEVIER SCIENCE PUBLISHERS B.V, NL, vol. 1216, no. 18, 1 mai 2009 (2009-05-01) , pages 4113-4120, XP026065223, ISSN: 0021-9673, DOI: 10.1016/J.CHROMA.2009.02.094 [extrait le 2009-03-09]

**Description**

**DOMAINE TECHNIQUE**

La présente invention appartient au domaine des procédés d'analyse qualitative ou quantitative des constituants d'un échantillon à l'aide d'un spectromètre de masse couplé à un plasma inductif (dit spectromètre « ICPMS » selon l'acronyme anglais pour « Inductively Coupled Plasma Mass Spectrometer »).

L'invention concerne plus particulièrement un procédé de mesure isotopique par spectrométrie ICPMS d'espèces chargées électriquement, en particulier d'espèces minérales ou organométalliques, contenues dans une solution à analyser.

**ARRIERE-PLAN TECHNIQUE**

La mesure isotopique consiste à déterminer la présence et/ou la concentration dans un échantillon d'un ou plusieurs isotopes d'un élément chimique.

Elle est notamment réalisée dans le domaine nucléaire, celui des sciences du vivant (biodisponibilité, études de spéciation, ...), de l'environnement et des géosciences (détermination de variation isotopique, spéciation et migration-rétention des éléments, ...).

La mesure isotopique est couramment réalisée à l'aide d'un spectromètre ICPMS.

Ce type de spectromètre se compose d'une torche à plasma et d'un spectromètre de masse.

La torche à plasma contient un gaz qui, sous l'action d'une décharge électrique et d'un champ radiofréquence, génère un plasma qui ionise avec un rendement proche de 100 % tout ou une partie des éléments introduits dans la torche sous forme élémentaire ou de composés.

Les ions ainsi formés sont ensuite analysés par la partie spectromètre de masse qui détecte chaque ion en fonction de son rapport masse/charge.

La spectrométrie ICPMS est devenue une technique analytique incontournable depuis de nombreuses années. Elle permet d'analyser rapidement au moins 70 éléments de la classification périodique de manière qualitative et quantitative, tout en présentant une bonne répétabilité, sensibilité, résolution, et une relation linéaire entre la quantité de l'espèce à analyser et le signal détecté.

Lorsque la solution à analyser comprend plusieurs espèces chargées, il est toutefois préférable d'améliorer la résolution de la mesure en séparant préalablement les espèces avec une technique séparative telle que la chromatographie ou l'électrophorèse capillaire de zone.

Cette séparation en amont de la mesure est en particulier indispensable lorsque la solution à analyser contient des espèces présentant une interférence isobarique de par leur masse voisine. C'est le cas par exemple des éléments $^{150}$Nd et $^{150}$Sm dont les masses atomiques sont respectivement de 149,920887 et 149, 917271 unités de masse atomique (uma).

En pratique, l'association entre la technique séparative et le spectromètre ICPMS peut être effectuée selon un mode de couplage indirect (dit « off-line ») ou selon un mode de couplage direct (dit « on-line »).

Dans le couplage indirect, la mesure isotopique est réalisée en deux temps. Dans un premier temps, les espèces contenues dans la solution à analyser sont séparées puis collectées individuellement en sortie de technique séparative. Dans un deuxième temps, chaque fraction collectée est portée à sec par chauffage, additionnée d'acide nitrique puis analysée par le spectromètre ICPMS.

Chaque fraction contient une seule espèce. Elle présente donc une composition homogène. Le signal mesuré par le spectromètre ICPMS est alors continu, ce qui a pour avantage d'assurer la stabilité et donc la précision de la mesure.

Le couplage indirect a toutefois pour inconvénient qu'il nécessite des étapes de collecte et de traitement de fractions qui sont difficilement automatisables et qui allongent significativement la durée de l'ensemble du processus d'analyse.

Dans le couplage direct, la mesure isotopique est quant à elle réalisée en une seule séquence. Une fois séparées, les espèces sont introduites en continu dans le spectromètre ICPMS couplé à la technique séparative via une interface appropriée. Le couplage direct s'affranchit donc du traitement des fractions collectées inhérent au couplage indirect, ce qui permet de réduire notablement le temps de mesure. Le document « Pitois A. et al., International Journal Of Mass Spectrometry, 2008, 270, pages 118-126 » propose ainsi une mesure isotopique dans laquelle des produits de fission nucléaire sont séparés par électrophorèse de zone à l'aide d'un dispositif d'électrophorèse capillaire relié par couplage direct à un spectromètre ICPMS.

Le couplage direct a toutefois pour inconvénient que la composition en sortie de la technique séparative varie dans le temps au fur et à mesure de l'arrivée de là zone d'élution propre à chaque espèce séparée. Cela provoque une variation importante et rapide du signal entre les points de mesure. L'enregistrement de ce signal transitoire par le spectromètre ICPMS est dès lors effectué avec une précision et une reproductibilité qui est moins bonne que celle du couplage indirect.

De plus, il s'avère difficile d'estimer l'étendue de la zone d'élution sur lequel il est opportun d'effectuer l'enregistrement par le spectromètre ICPMS, ce qui est préjudiciable à la représentativité de la mesure. Ainsi, la reproductibilité en couplage direct est généralement dix fois moins bonne que celle obtenue en couplage indirect.

## EXPOSE DE L'INVENTION

Un des buts de l'invention est donc de fournir un procédé de mesure isotopique d'espèces chargées, dans lequel le couplage entre la technique séparative et le spectromètre ICPMS présente tout ou partie des avantages précités des couplages direct et indirect. Un tel procédé permet notamment une mesure automatisable et de durée réduite, présentant une reproductibilité et une résolution améliorée, en particulier lorsque la solution à analyser présente une interférence isobarique.

La présente invention concerne ainsi un procédé de mesure isotopique selon la revendication 1.

Le procédé de mesure de l'invention se caractérise notamment par l'utilisation de l'isotachophorèse qui est un mode particulier de mise en oeuvre d'un dispositif d'électrophorèse capillaire ; ainsi que par le fait que le spectromètre ICPMS est relié par couplage direct avec le dispositif d'électrophorèse capillaire, ce qui permet d'effectuer la mesure isotopique selon l'étape c) dans la continuité de la séparation selon l'étape b). Comme exposé ci-après, seule la combinaison de ces deux caractéristiques permet d'atteindre les buts fixés par l'invention.

Un dispositif d'électrophorèse capillaire se compose essentiellement de deux réservoirs reliés par une colonne capillaire (désignée ci-après par le terme « capillaire »), chaque réservoir contenant un électrolyte et une électrode. Après application d'une tension entre les deux électrodes, les espèces chargées à analyser introduites dans le capillaire rempli d'électrolyte se séparent suivant leur mobilité électrophorétique effective (dite mobilité) qui est fonction de leur rapport (charge électrique)/(taille). Les espèces séparées sont ensuite détectées à l'aide d'une technique analytique appropriée.

Le mode isotachophorèse de l'électrophorèse capillaire se caractérise par l'utilisation d'un milieu de séparation discontinu composé d'un électrolyte leader et d'un électrolyte terminal de composition distincte entre lesquels on intercale de façon contiguë la solution à analyser. Les électrolytes leader et terminal sont respectivement placés après l'entrée et avant la sortie du capillaire, et présentent une mobilité effective supérieure et inférieure à celles des espèces à analyser. La composition des électrolytes doit donc tenir compte de la valeur des mobilités effectives des espèces à analyser, sous peine que ces espèces ne soient pas séparées.

Après application d'une tension entre les électrodes, les espèces vont s'ordonner progressivement selon une mobilité croissante jusqu'à un état d'équilibre. Elles se répartissent alors dans des zones d'élution contiguës nettement délimitées et qui leur sont propres, à une concentration homogène égale à celle de l'électrolyte leader. Les espèces sont donc concentrées ou diluées en fonction de leur concentration initiale dans la solution à analyser. C'est la raison pour laquelle l'isotachophorèse est en général essentiellement utilisée pour préconcentrer les espèces et non les séparer.

L'isotachophorèse se distingue donc de la mise en oeuvre classique de l'électrophorèse capillaire (dite de zone ou en solution libre), par l'utilisation d'un milieu de séparation discontinu (au moins deux électrolytes au lieu d'un seul), mais également par le fait que, puisque la concentration d'une espèce à analyser est homogène en tous points de la zone d'élution obtenue en isotachophorèse, sa détection se traduit par un signal d'amplitude constante ou sensiblement constante au sein de cette zone, plutôt que par un pic reflétant une variation de concentration dans le temps. Un tel signal (par exemple une bande) présente donc généralement des variations d'amplitude inférieures à 25 % (de préférence 10 % à 15 %) de son amplitude moyenne sur 50 % (de préférence 80 %) de sa largeur médiane.

Le nombre de points de mesure que peut enregistrer le spectromètre ICPMS dépend de la largeur de la zone d'élution.

Ceci constitue un des inconvénients majeurs d'une séparation classique par électrophorèse capillaire de zone, qui lorsqu'elle est efficace génère des pics d'élution fins d'amplitude maximale, et donc de durée minimale offrant un faible nombre de points de mesure par unité de temps. Il existe dès lors une forte variation d'amplitude du signal transitoire entre deux points consécutifs qui provoquent une instabilité et une imprécision de la mesure par le spectromètre ICPMS.

Au contraire, selon le procédé de mesure isotopique de l'invention, la séparation par isotachophorèse des espèces chargées se traduit par leur détection sous forme d'un signal transitoire d'amplitude constante et de durée importante (généralement un signal sous forme d'une bande), ce qu'aucune autre technique séparative telle que la chromatographie ou l'électrophorèse capillaire de zone ne permet d'obtenir.

Comme illustré ci-après pour le calcul de la résolution (Rs), cette particularité de l'isotachophorèse facilite et rationalise le traitement du signal et permet d'obtenir une mesure par ICPMS qui est plus stable et plus précise en comparaison de celle obtenue avec un signal sous forme d'un pic.

Cette séparation des espèces avec le dispositif d'électrophorèse capillaire selon le mode isotachophorèse est à distinguer d'une séparation dans laquelle des espèces sont soumises dans un premier temps à une isotachophorèse (notée « ITP ») dans le but de les préconcentrer, puis séparées dans un deuxième temps par un mode de séparation classique par électrophorèse capillaire (noté « CE »), mode dit « ITP-CE », à savoir ITP suivi de CE.

L'utilisation d'une séparation par électrophorèse capillaire selon un mode autre que l'isotachophorèse (comme par exemple l'électrophorèse capillaire de zone notée « CZE ») ne permet en aucun cas de détecter des espèces chargées sous forme d'un signal d'amplitude constante ou sensiblement constante, et donc d'obtenir les avantages précités du procédé de mesure de l'invention.

A ce titre, il est à noter que seul un couplage direct entre le spectromètre ICPMS et le dispositif d'électrophorèse capillaire permet d'effectuer l'étape c) dans la continuité de l'étape b) du procédé de mesure de l'invention, et ainsi de préserver lors de la mesure isotopique à l'aide du spectromètre ICPMS un signal d'amplitude constante ou sensiblement constante obtenu préalablement par isotachophorèse.

C'est donc la combinaison de la séparation des espèces par isotachophorèse et de leur détection à l'aide d'un spectromètre (ICPMS) relié par couplage direct avec le dispositif d'électrophorèse capillaire qui permet d'obtenir les avantages du procédé de mesure de l'invention.

De tels avantages peuvent même être exacerbés par une augmentation de la largeur de la zone élution (et donc de la durée du signal transitoire, par exemple sous forme de bande) en diminuant l'intensité du courant appliqué lors de la séparation, ce qui, en isotachophorèse, n'affecte pas l'efficacité de la séparation.

A titre préférentiel, on peut ainsi séparer les espèces chargées en appliquant une faible intensité de courant lors de la mise en oeuvre de l'étape d'isotachophorèse du procédé de mesure de l'invention, à savoir préférentiellement une intensité comprise entre 0,1 $\mu$A et 10 pA, encore plus préférentiellement entre 1 $\mu$A et 10 $\mu$A, voire entre 1 $\mu$A et 5 $\mu$A.

Malgré l'ancienneté des techniques d'isotachophorèse et d'ICPMS, les inventeurs sont à leur connaissance les premiers à avoir identifié l'intérêt à combiner ces techniques par couplage direct, afin de réaliser la mesure isotopique d'espèces chargées , en obtenant tout ou partie des avantages du couplage direct et du couplage indirect.

## EXPOSE DETAILLE DE L'INVENTION

Dans la présente description, un verbe tel que « comprendre », « comporter », « incorporer », « inclure » et ses formes conjuguées sont des termes ouverts et n'excluent donc pas la présence d'élément(s) et/ou étape(s) additionnels s'ajoutant aux élément(s) et/ou étape(s) initiaux énoncés après ces termes. Toutefois, ces termes ouverts visent en outre un mode de réalisation particulier dans lequel seul(s) le(s) élément(s) et/ou étape(s) initiaux, à l'exclusion de tout autre, sont visés ; auquel cas le terme ouvert vise en outre le terme fermé « consister en », « constituer de » et ses formes conjuguées.

L'usage de l'article indéfini « un » ou « une » pour un élément ou une étape n'exclut pas, sauf mention contraire, la présence d'une pluralité d'éléments ou étapes.

La mesure isotopique réalisée à l'aide du procédé de l'invention peut être quantitative ou qualitative.

Dans la présente description, elle consiste notamment à déterminer pour au moins un isotope des espèces chargées à analyser :

- la présence ou non de l'isotope ;
- les abondances isotopiques des différents isotopes d'une même espèce ;
- la concentration en solution de l'isotope par une technique de dilution isotopique telle que décrite dans le document « Méthodes d'analyses radiochimiques et isotopiques, G. Revel, Techniques de l'Ingénieur, fascicule P2595) ». La dilution isotopique comprend notamment :

  • la dilution isotopique simple (dite directe) : elle consiste à ajouter un traceur de concentration connue constitué par la même espèce mais de composition isotopique différente, par exemple enrichie en un de ses isotopes. Cette méthode permet d'effectuer des mesures de grande précision, sans droite d'étalonnage et en ne mesurant que des rapports isotopiques ;

  • la dilution isotopique double : le rapport d'abondance entre deux isotopes d'espèces distinctes (tel que 145Nd / 235U) est déterminé par l'ajout d'un double traceur isotopique.

Lorsque la mesure isotopique selon le procédé de l'invention consiste en une analyse quantitative, elle comprend de préférence une dilution isotopique, de préférence une dilution isotopique simple ou double, ou bien la mesure précise des abondances relatives des isotopes d'une espèce.

Les espèces chargées sont des cations ou des anions qui, au cours de l'isotachophorèse, migrent respectivement vers la cathode ou l'anode. Elles peuvent en particulier comprendre des cations minéraux (notamment des métaux de transition, alcalin, alcalino-terreux), des anions minéraux, des composés organométalliques, ou leurs mélanges.

Lorsque les espèces chargées à analyser sont des composés, l'isotope considéré est l'isotope d'un élément contenu dans ces composés.

De par les avantages qu'il présente, notamment sa résolution améliorée, le procédé de mesure de l'invention est particulièrement intéressant lorsqu'au moins deux des espèces chargées présentent au moins une interférence isobarique, de préférence lorsque cette interférence est telle que la différence de masse atomique entre les espèces est comprise entre 0,001 et 0,9 unités de masse atomique (u.m.a.). Le procédé de mesure de l'invention est ainsi particulièrement adapté à l'analyse d'une solution comprenant des lanthanides et/ou des actinides, ces espèces présentant fréquemment au moins une interférence isobarique.

Concernant l'électrolyte leader ou terminal utilisé au cours de l'isotachophorèse, il présente généralement une concentration comprise entre 1 mM et 100 mM, de préférence entre 10 mM et 20 mM.

Il possède le plus souvent un pouvoir tampon. L'électrolyte terminal peut ainsi être un composé zwitérionique (chlorure de carnitine, β-alanine, ...), en particulier un acide carboxylique (de préférence l'acide acétique).

Le pH des électrolytes est généralement compris entre 3,5 et 5,2, après ajustement éventuel à l'aide par exemple d'ammoniaque ou d'acide acétique selon les conditions de pH requises.

Préférentiellement, l'électrolyte leader et/ou terminal est une solution aqueuse d'un composé comprenant les éléments carbone, hydrogène et oxygène (et éventuellement azote).

Ceci permet une destruction aisée des électrolytes après la mise en oeuvre du procédé de mesure de l'invention, ainsi qu'une totale compatibilité avec la détection ICPMS (absence de contamination du spectromètre ICPMS avec des atomes tels que Na, Li, K, ou P éventuellement présents en forte concentration).

Afin d'améliorer la séparation des espèces chargées, le capillaire peut également contenir un agent complexant destiné à former au moins un complexe avec tout ou partie des espèces chargées au cours de l'isotachophorèse. Ceci est particulièrement utile lorsque ces espèces comprennent plusieurs lanthanides, car leurs mobilités étant généralement proches, ils sont séparés suivant la stabilité du complexe formé.

Cette amélioration de la séparation peut être encore renforcée en ajoutant un agent assistant à l'agent complexant (dit agent de synergie) afin de former au moins un complexe mixte avec tout ou partie des espèces chargées.

L'agent complexant et/ou l'agent assistant est de préférence contenu dans l'électrolyte leader.

En fonction des espèces à séparer, l'agent complexant peut être choisi parmi l'acide 2-hydroxy-2-methyl butyrique (HMBA) (de préférence, notamment lorsque les espèces comprennent des lanthanides et/ou des actinides), l'acide hydroxyisobutyrique (HIBA), l'acide éthylènediamine tétraacétique (EDTA), l'acide pyridine-2,6-dicarboxylique (PDCA), l'acide lactique, l'acide tartrique, l'acide oxalique, l'acide malonique, l'acide maléique, l'acide isobutyrique ou leurs mélanges.

L'agent assistant peut être choisi parmi l'acide diglycolique, l'acide malonique, l'acide maléique, l'acide formique, l'acide citrique, l'acide acétique, l'acide tartrique (de préférence) ou leurs mélanges.

Encore plus préférentiellement, lorsque les espèces chargées à analyser contiennent les éléments Eu et Gd, l'agent complexant est l'HIBA ou l'EDTA, associé avec l'acide tartrique (de préférence) ou l'acide malonique.

Concernant l'appareillage utilisé par le procédé de mesure de l'invention, le dispositif d'électrophorèse capillaire peut être en tout ou partie implanté sur un microsystème fluidique, dont il constitue de préférence le système d'injection. Un tel mode de réalisation permet une mesure isotopique d'une solution à analyser présentant un faible volume, ainsi que la mise en place d'un système jetable évitant les lavages et les contaminations croisées entre différentes mesures isotopiques.

Le matériau constituant la partie du microsystème fluidique en contact avec la solution à analyser est préférentiellement composé d'un matériau plastique choisi parmi un copolymère d'oléfine cyclique (CoC), le polydiméthylsiloxane (PDMS), ou le polyméthacrylate de méthyle (PMMA).

Parmi ces composés, le CoC est utilisé de préférence de par son faible coût, ses bonnes propriétés mécaniques qui le prédisposent aux techniques d'usinage et de fabrication d'un microsystème fluidique par pressage à chaud (« hot embossing »), ses propriétés électriques qui lui permettent de résister à des champs électriques élevés, ainsi que son inertie chimique et son hydrophobicité qui le rendent compatible avec de nombreux solvants sans crainte de modification de ses propriétés de surface lors de la mesure isotopique.

Le Coc est par exemple le Zeonor 1020R (commercialisé par la société ZEONEX).

Concernant le spectromètre ICPMS, tout type convenant à la mesure isotopique d'espèces chargées peut être utilisé.

Il peut s'agir par exemple un spectromètre ICPMS quadripolaire, à secteur magnétique, à temps de vol (ICP-TOF). Il peut être mono ou multi-collection.

De préférence, le spectromètre ICPMS est de type multi collection, à savoir qu'il dispose de plusieurs détecteurs sur la trajectoire des ions déviés, ce qui permet d'acquérir simultanément plusieurs signaux correspondant chacun à une masse donnée, et donc à une espèce chargée donnée. Un tel type de spectromètre permet de réaliser une mesure isotopique avec une précision, une justesse et une rapidité améliorées, sur une large gamme d'éléments chimiques et à des concentrations très basses. Ceci favorise la mise en oeuvre de mesures isotopiques à l'aide de plusieurs traceurs isotopiques, telle que la dilution isotopique double.

Afin de compenser au mieux la différence de débit entre la sortie du capillaire et l'entrée du spectromètre ICPMS tout en fermant le circuit électrique en sortie du capillaire, le dispositif d'électrophorèse capillaire et le spectromètre ICPMS sont reliés par couplage direct, de préférence via un système permettant de générer des gouttes, tel que par exemple un piézo générateur de goutte (commercialisé notamment par la société Microdrop) ou un nébuliseur. Un tel système est notamment décrit dans le document « Michalke B, Electrophoresis, 2005, vol. 26, no. 7-8, pages 1584-1597 ».

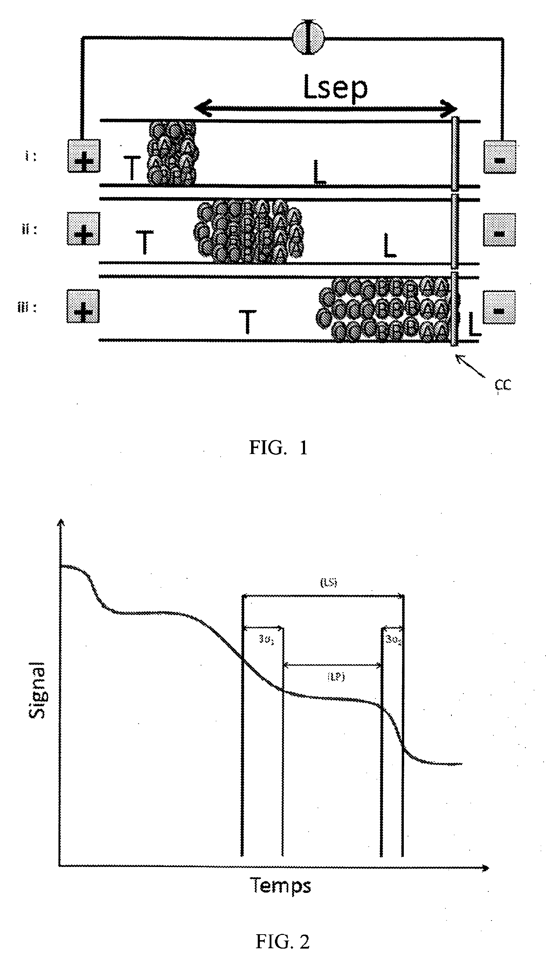

D'autres objets, caractéristiques et avantages de l'invention vont maintenant être précisées dans la description qui suit de modes de réalisation particuliers du procédé de mesure de l'invention, donnés à titre illustratif et non limitatif, en référence aux Figures 1 à 5 annexées.

## BREVE DESCRIPTION DES FIGURES

Les Figures 1 et 2 représentent le principe de la séparation d'espèces chargées par isotachophorèse et l'isotachophérogramme correspondant qui serait obtenu par détection conductimétrique.

Les Figure 3 et 4 représentent le signal obtenu par détection conductimétrique et détection par ICPMS, après séparation par isotachophorèse des lanthanides Nd, Sm, Eu et Gd.

La figure 5 représente le signal obtenu par détection ICPMS d'isotopes des lanthanides Nd et Sm après séparation de ces éléments par isotachophorèse.

## EXPOSE DE MODE DE REALISATIONS PARTICULIERS

Les modes de réalisation particuliers du procédé de mesure de l'invention portent sur l'analyse de trois solutions de lanthanides à l'aide d'un appareillage consistant en un dispositif d'électrophorèse capillaire (comprenant un capteur conductimétrique) relié par couplage direct, via un nébuliseur, à un spectromètre ICPMS.

### 1. __Appareillage.__

### 1.1. __Dispositif d'électrophorèse capillaire.__

A moins qu'il en soit précisé autrement, la description qui suit du dispositif d'électrophorèse capillaire et des conditions opératoires associées est transposable au cas particulier où ce dispositif est sous forme d'un microsystème fluidique.

Le dispositif d'électrophorèse capillaire comprend une anode et une cathode qui sont composées de platine.

Son capillaire est placé dans une cassette thermostatée à une température de 25°C.

La surface interne du capillaire est tapissée d'un revêtement de silice fondue. À titre alternatif, un revêtement composé de téflon ou de CoC peut également convenir.

Chacune des extrémités du capillaire plonge dans un réservoir : l'entrée du capillaire dans le réservoir contenant l'électrolyte terminal, la sortie du capillaire dans le réservoir contenant l'électrolyte leader.

Le réservoir de sortie et son électrode (ici la cathode) débouchent dans le nébuliseur.

La séparation par isotachophorèse des espèces chargées contenues dans les solutions est effectuée selon le principe schématisé par les étapes i) à iii) de la Figure 1 :

i) dans le capillaire, on intercale, entre l'électrolyte terminal (T) et l'électrolyte leader (L), la solution à analyser contenant des espèces chargées tels que des cations notés A, B et C. Ceci est par exemple réalisé par remplissage du capillaire avec l'électrolyte leader, injection de la solution à analyser par l'entrée du capillaire, puis insertion de l'entrée du capillaire dans le réservoir contenant l'électrolyte terminal ;

ii) on établit une intensité constante (I) entre la cathode (-) et l'anode (+) afin que les espèces chargées se séparent selon une mobilité croissante en parcourant une longueur de séparation (Lsep) délimitée par l'entrée capillaire et un détecteur tel que le capteur conductimétrique (noté CC) ou le spectromètre ICPMS (non représenté sur la Figure 1) ;

iii) on effectue une mesure des espèces lorsqu'elles passent devant le capteur conductimétrique puis une mesure isotopique lorsqu'elles sont introduites dans le spectromètre ICPMS.

La largeur du signal obtenu par isotachophorèse est théoriquement considérée comme représentative de la quantité exprimée sous forme de masse d'une espèce chargée.

En pratique, on observe des phénomènes de diffusion.

La qualité de la séparation est évaluée en observant la netteté de la transition entre les différents signaux (une bonne séparation entre deux espèces chargées se traduisant par une transition abrupte entre les signaux respectifs de ces espèces) et la présence éventuelle de signaux supplémentaires correspondant au mélange de deux espèces présentant une mobilité voisine.

Elle peut être déterminée numériquement au travers du calcul de la résolution (notée Rs) selon la formule suivante :

$$RS = 1 - (3\sigma1 + \sigma2) / LS \qquad ,$$

dans laquelle, conformément à la Figure 1 transposable à la détection par spectrométrie ICPMS :

- LS = largeur d'un signal caractéristique d'une espèce chargée ;
- LP = largeur de la section du signal LS qui est sous forme de plateau (soit en pratique la zone d'élution contenant une espèce chargée pure à 99 %) ;
- $\sigma1$ ou $\sigma2$ = écart type sur chaque frontière de LP, correspondant à une zone de diffusion $\sigma1$ ou $\sigma2$ dans laquelle on observe un mélange dans des proportions variables entre les espèces de signaux adjacents. Chaque zone de diffusion est comprise entre une limite de la section LP et le point d'inflexion immédiatement adjacent du signal.

Comme indiqué précédemment, le calcul de la résolution (RS) sur une bande se trouve facilité et rationalisé par rapport au calcul de la résolution sur un pic, car il est effectué à partir de paramètres (notamment LS) qui sont déterminés de façon mathématique et non pas empirique.

Conformément à ses connaissances générales, l'homme du métier peut améliorer la qualité de séparation en modulant un ou plusieurs des paramètres suivants :

- le rapport entre le volume de la solution à analyser et le volume de la section de séparation du capillaire ;
- l'écoulement électroosmotique ;
- la composition du revêtement de la paroi interne du capillaire, afin de limiter les interactions avec les espèces à analyser ;
- la durée de la séparation, qui doit être suffisante afin d'atteindre l'état d'équilibre de l'isotachophorèse dans lequel les espèces chargées sont à une concentration égale à celle de l'électrolyte leader dans des zones contiguës spécifiques. On peut également imposer un courant fort entre les électrodes (typiquement compris entre un 1 $\mu$A et 50 $\mu$A selon la taille du capillaire), tout en évitant l'effet Joule, afin d'atteindre plus rapidement l'état d'équilibre.

Les conditions opératoires de la séparation par isotachophorèse sont détaillées dans le Tableau A.

Tableau A

| ISOTACHOPHORESE | |
| --- | --- |
| **Conditions analytiques** | |
| réduction de l'écoulement électroosmotique (EOF) | oui |
| intensité de séparation | 1 $\mu$A |
| volume injecté de la solution à analyser | 1,4 $\mu$L |
| résolution moyenne par lanthanide | 0,7 |

Afin d'optimiser la séparation des espèces chargées, le capillaire fait l'objet d'adaptations particulières.

### 1.1.1. Structure du capillaire.

On réalise une association de deux capillaires, afin de réduire la longueur de la zone d'injection tout en augmentant fortement son volume. Ceci est préconisé lorsque la solution à analyser présente un volume qui dépasse d'au moins 20 % le volume du capillaire.

Le capillaire se compose d'un premier capillaire (diamètre interne = 150 $\mu$m, diamètre externe = 375 $\mu$m, longueur = 8 cm) qui est connecté de force à un second capillaire (diamètre interne = 30 $\mu$m, diamètre externe = 375 $\mu$m, longueur = variable) à l'aide d'un raccord en téflon de 325 $\mu$m de diamètre interne. Ce raccord permet au capillaire de résister à des pressions de plusieurs bars sans générer de volume mort.

Le premier capillaire délimite un volume d'injection de 1,4 $\mu$L qui est destiné à recevoir successivement l'électrolyte leader, la solution à analyser, puis l'électrolyte terminal.

Le second capillaire se décompose en une section de séparation, et une section dite électrique de 14 cm constituée par la section se trouvant entre la zone de détection du capteur conductimétrique et la sortie du capillaire débouchant dans le nébuliseur.

### 1.1.2. <u>Prétraitement du capillaire.</u>

Comme cela est d'usage courant en électrophorèse capillaire, le revêtement interne du capillaire composé de silice est de préférence prétraité avec de l'alcool polyvinylique (PVA) afin d'améliorer la séparation des espèces chargées.
L'objectif étant de prétraiter un capillaire dont une partie présente un diamètre interne de 30 $\mu$m, la concentration de la solution aqueuse de PVA est limitée à 5 % en masse afin de lui conserver une certaine fluidité.
Le capillaire est tout d'abord rincé par une solution de soude 1 M (2 bars, 30 minutes) puis par une solution d'acide chlorhydrique 1 M (2 bars, 30 minutes).
Après séchage sous azote (2 bars, 10 minutes), il est prétraité par une solution de PVA acidifiée à pH 1 par ajout d'acide chlorhydrique qui est introduite à une pression de 5 bars d'azote pendant 90 minutes.
Le capillaire est ensuite vidé sous une pression de 2 bars et chauffé pendant 8 heures à 145°C sous circulation d'azote à une pression de 2 bars.

### 1.1.3. <u>Capteur conductimétrique sans contact.</u>

Bien que cela ne soit pas essentiel pour mettre en oeuvre le procédé de mesure de l'invention, le dispositif d'électrophorèse capillaire contient un capteur conductimétrique sans contact (de type C4D : modèle « Tracedec » commercialisé par la société Innovative Sensor Technologies GmbH) afin d'évaluer l'efficacité de la séparation des espèces chargées en amont de la détection par le spectromètre ICPMS.
Un tel capteur conductimétrique détecte une espèce grâce au changement de conductivité qu'elle provoque lors de sa migration dans le capillaire. Il ne présente aucun contact avec la solution à analyser ou les électrolytes, et n'a donc aucune influence sur la séparation.
En pratique, le capteur conductimétrique est placé dans la cassette thermostatée le long d'une portion du capillaire et à faible distance du nébuliseur. En déplaçant le capteur le long du capillaire, il apparaît généralement une position pour laquelle la séparation est réalisée dans des conditions suffisantes. Dans le cas présent, la qualité de la séparation n'évolue plus lorsque le capteur est placé à une distance de 14 cm de l'extrémité cathodique du capillaire.
Les conditions opératoires du capteur conductimétrique sont détaillées dans le Tableau B.

Tableau B

| CAPTEUR CONDUCTIMETRIQUE SANS CONTACT | |
|---|---|
| fréquence | 2*HIGH |
| voltage | -18 dB |
| gain | 100 % |
| offset | 020 |
| type | CE |
| senseur | HS |
| fréquence d'acquisition | 5,47 Hz |
| filtre | FAST |

### 1.2. Nébuliseur.

Lorsque l'on réalise le couplage direct entre un dispositif d'électrophorèse capillaire et un spectromètre ICPMS, il est préférable de compenser la différence de débit entre la sortie du capillaire (1 à 100 nL/min) et l'entrée du spectromètre ICPMS (20 à 1000$\mu$L/min) tout en fermant le circuit électrique en sortie du capillaire.
Pour cela, l'interface choisie entre le dispositif d'électrophorèse capillaire et le spectromètre ICPMS est un nébuliseur (modèle « Mira Mist CE » commercialisé par la société Burgener). Ce nébuliseur permet la formation d'un aérosol homogène, sans effet de succion du contenu du capillaire, ce qui dégraderait la séparation par la formation d'un écoulement parasite et par la vidange du capillaire. La nébulisation est assurée par un flux d'argon.
Le positionnement du capillaire à l'intérieur du corps du nébuliseur est optimisé afin d'améliorer la sensibilité des signaux transitoires. La sortie du capillaire est ici positionnée à 1 mm en retrait de l'entrée du nébuliseur.

Selon les préconisations du constructeur, ce nébuliseur est connecté à un raccord en T comprenant une première entrée recevant la capillaire, une deuxième entrée recevant la cathode qui est traversée par un conduit coaxial acheminant un liquide de compensation (dite « make-up solution » en anglais), et d'une sortie débouchant sur une chambre de nébulisation raccordée au spectromètre ICPMS.

Le nébuliseur débouche dans une chambre de nébulisation qui est une micro chambre linéaire en téflon offrant un taux de transfert de l'aérosol et un temps de séjour qui sont réduits.

Le liquide de compensation permet de fermer le circuit électrique et d'adapter le débit du dispositif d'électrophorèse capillaire au débit de travail du spectromètre ICPMS. Il est stocké dans une seringue de 10 ml en polypropylène. Son débit, généralement compris entre 0,005 et 1mL/min, est fixé à $10\mu L/min$ (par un pousse seringue commercialisé par la société Harvard Apparatus).

Le liquide de compensation a la composition de l'électrolyte leader, ce qui permet de préserver l'équilibre de séparation en fournissant le cas échéant au système l'agent complexant durant tout le temps de la mesure.

### 1.3. Spectromètre ICPMS.

Deux spectromètres ICPMS se distinguant par leur spectromètre de masse sont utilisés lors des mesures isotopiques : un spectromètre ICPMS quadripolaire (modèle X7 séries 2 Thermo Electron commercialisé par la société Thermo Fisher Scientific) et un spectromètre ICPMS multi-collection (modèle Isoprobe à secteur magnétique et multi collecteur, commercialisé par la société GV Instruments), qui permettent respectivement d'effectuer une mesure isotopique avec une précision de l'ordre de quelques pourcents et quelques pour milles.

### 1.3.1. Spectromètre ICPMS Quadripolaire.

La détection par ICPMS quadripolaire (noté ICP-QMS) est préalablement optimisée en l'absence de séparation par isotachophorèse.

Pour cela, une solution test de Nd est injectée jusqu'au nébuliseur par l'application d'une pression constante de 30 mbars sur le capillaire rempli d'électrolyte leader. Les réglages de positionnement de la torche à plasma, les débits de gaz et l'optique ionique sont alors ajustés afin d'obtenir un signal optimum à la masse 142 (142Nd+).

La stabilité du signal est contrôlée en calculant le rapport entre les écarts type des mesures rapportés aux valeurs moyennes en pourcent (RSD) sur une série de 10 mesures successives. Le rapport entre les signaux $^{142}NdO^{+}/^{142}Nd^{+}$ (%) permet de déterminer directement le taux d'oxyde. Les RSD obtenus varient typiquement entre 1 % et 10 % pour la stabilité du signal. Le taux d'oxyde est typiquement inférieur à 3 %.

Après optimisation, le spectromètre ICP-QMS est mis en oeuvre selon les conditions opératoires détaillées dans le Tableau C.

<div align="center">Tableau C</div>

| ICP-QMS (quadripolaire) | |
| --- | --- |
| puissance radiofréquence du plasma | 1100 W |
| débit de gaz de nébulisation | 0,7-0,8 L/min |
| débit de gaz auxiliaire | 0,9 L/min |
| débit de gaz de refroidissement | 15 L/min |
| largeur de pic à 10 % de la hauteur | 0,82 unités de masse atomique (u.m.a) |
| mode de mesure | saut de pic |
| temps d'intégration par mesure | 50 ms |

### 1.3.2. Spectromètre ICPMS Multi-collection.

Le spectromètre ICPMS multi-collection (noté ICP-MC-MS) est un instrument à secteur magnétique à simple focalisation (modèle Isoprobe commercialisé par la société GV Instruments).

Il est équipé d'une source ICP, d'une cellule de collision-réaction, d'un secteur magnétique et d'un système de multi-collection, ainsi que d'une électrode de Daly implantée en position axiale. Une électrode de garde en platine est insérée entre la torche et la spire afin d'augmenter la sensibilité des mesures et supprimer les effets de décharge capacitives secondaires.

Le système de multi-collection de l'ICP-MC-MS comprend neufs cages de Faraday (L2 située à gauche de la cage axiale AX, et H1 à H7 situées à droite) permettant de mesurer simultanément les signaux de différents isotopes.

Leur positionnement est réalisé en injectant une solution standard contenant les isotopes d'intérêt. Les paramètres de gain des cages de Faraday sont calibrés juste avant les mesures afin d'obtenir une reproductibilité des gains électriques meilleures que 20ppm/jour.

L'optimisation de l'intensité du faisceau d'ion est effectuée par ajustement de la position de la torche, des débits de gaz, de l'optique ionique et des paramètres de réglage du secteur magnétique.

La mesure est effectuée selon une série de 2 blocs de 10 mesures ou cycles avec un temps d'intégration de 10 secondes par cycle.

Les principales conditions opératoires de l'ICP-MC-MS pour la mesure de la solution 3 (Nd, Sm) sont détaillées dans le Tableau D. De par le nombre limité cages de Faraday, seuls les isotopes de masse 142 à 150 sont détectés simultanément.

Tableau D

| ICP-MC-MS (Multi-collection) | | |
|---|---|---|
| puissance radiofréquence du plasma | 1350 W | |
| débit de gaz de nébulisation | 0,78 L/min | |
| débit de gaz auxiliaire | 1,2 L/min | |
| débit de gaz de refroidissement | 14 L/min | |
| temps d'intégration par mesure | 300 ms | |
| nombre de mesures par valeur | 100 ms | |
| attribution des collecteurs | Nd | Sm |
| L2 | $^{142}Nd$ | |
| Ax | $^{143}Nd$ | |
| H1 | $^{144}Nd$ | $^{144}Sm$ |
| H2 | $^{145}Nd$ | |
| H3 | $^{146}Nd$ | |
| H4 | | $^{147}Sm$ |
| H5 | $^{148}Nd$ | $^{148}Sm$ |
| H6 | | $^{149}Sm$ |
| H7 | $^{150}Nd$ | $^{150}Sm$ |

## 2. Préparation des électrolytes et des solutions à analyser.

### 2.1. Electrolytes.

Les électrolytes sont de préférence exempts de composés à faible potentiel d'ionisation tels que le sodium ou des sels inorganiques qui, en spectrométrie ICPMS et à de fortes concentrations, peuvent provoquer des effets de matrice et obstruer les cônes d'extraction.

L'électrolyte leader est composé d'acide acétique ($10.10^{-3}$ mol/L) auquel on ajoute de l'acide 2-hydroxy-2-méthylbutyrique (HMBA, $14.10^{-3}$ mol/L) en tant qu'agent complexant. Il présente un pH de 4,5 après ajustement par ajout de $NH^{4+}$ qui constitue le cation de mobilité supérieure à celle des lanthanides à analyser. La forme libre déprotonée du complexant étant anionique, elle traverse le capillaire en migrant en continu vers l'anode au cours de la séparation par isotachophorèse.

L'électrolyte terminal est composé d'acide acétique ($15.10^{-3}$ mol/L, pH=3,3). Les protons très mobiles de l'électrolyte terminal sont en partie consommés par la forme déprotonée de l'agent complexant.

### 2.2. Solutions à analyser.

Les trois solutions à analyser sont préparées à partir de solutions commerciales de lanthanides (solutions standards mono élémentaire commercialisées par la société SPEX Certiprep).

Ces solutions commerciales contiennent une forte concentration en acide nitrique (5 %). Elles subissent un traitement préparatoire dans lequel elles sont portées deux fois à sec à une température de 90°C, puis reprises à volume équivalent avec de l'eau ultra pure provenant d'un système Elga UHQII (commercialisé par Veolia Water).

Après dilution, on obtient les solutions 1 à 3 dont la composition est détaillée dans les analyses correspondantes.

## 3. Analyse des solutions.

### 3.1. Analyse de la solution 1 (quatre lanthanides à la même concentration).

On prépare une solution 1 comprenant quatre lanthanides (Nd, Sm, Eu et Gd) dont le Tableau E détaille la composition isotopique selon l'abondance naturelle de chaque isotope et les interférences isobariques potentielles entre les lanthanides, ou entre les lanthanides et leurs oxydes.

La concentration de chaque lanthanide, tous isotopes confondus, est de 3,6 ng/$\mu$L.

Tableau E

| Masse (u.m.a) | Nd | Sm | Eu | Gd |
|---|---|---|---|---|
| 142 | 142 (27,16%) | | | |
| 143 | 143 (12,18%) | | | |
| 144 | 144 (23,83%) | 144 (3,07%) | | |
| 145 | 145 (8,30%) | | | |
| 146 | 146 (17,17%) | | | |
| 147 | | 147 (14,99%) | | |
| 148 | 148 (5,74%) | 148 (11,24%) | | |
| 149 | | 149 (13,81%) | | |
| 150 | 150 (5,62%) | 150 (7,37%) | | |
| 151 | | | 151 (47,81%) | |
| 152 | | 152 (26,74%) | | 152 (0,20%) |
| 153 | | | 153 (52,19%) | |
| 154 | | 154 (22,752%) | | 154 (2,18%) |
| 155 | | | | 155 (14,79%) |
| 156 | | | | 156 (20,46%) |
| 157 | | | | 157 (15,65%) |
| 158 | 142+O16 | | | 158 (24,83%) |
| 159 | | | | |
| 160 | 144+O16 | 144+O16 | | 160 (21,86%) |

La solution 1 est soumise à une séparation par isotachophorèse dans laquelle le second capillaire présente une longueur totale de 94 cm comprenant une section de séparation de 80 cm jusqu'au capteur conductimétrique situé en amont du spectromètre ICP-QMS.

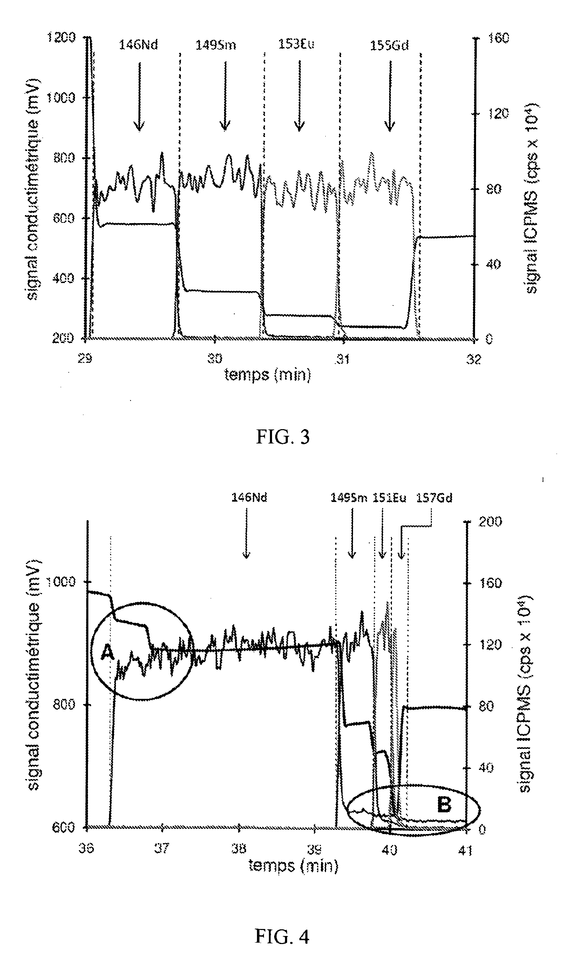

Les résultats sont illustrés par la Figure 3 dans laquelle les zones propres à chaque lanthanide sont délimitées par des barres verticales en pointillés, et apparaissent sous forme de bande.

La Figure 3 superpose les signaux obtenus en conductimétrie (marches) et ICPMS (bandes). La différence des longueurs de séparation entre ces deux détecteurs génère un délai de détection. Pour simplifier la comparaison des isotachophérogrammes obtenus, les signaux de l'ICPMS sont artificiellement translatés dans le temps.

La détection par ICPMS permet bien de distinguer différents isotopes d'un même lanthanide au sein de la solution 1. Toutefois, seules les bandes propres à un isotope de chaque lanthanide ne présentant pas d'interférence isobarique (146Nd, 149Sm, 153Eu, 155Gd) sont illustrées sur la Figure 3. L'amplitude de chaque bande est corrigée en fonction de l'abondance isotopique naturelle de chaque isotope (par exemple, l'amplitude du signal de 153Eu est corrigée par un facteur 100/52,19). La largeur de la bande est proportionnelle à la concentration du, lanthanide considéré (3,6 ng/µL).

De par la sélectivité de la détection à l'aide d'un spectromètre ICPMS, les bandes propres à chaque lanthanide apparaissent clairement séparées.

Cela permet de quantifier facilement la qualité de la séparation pour une espèce chargée en calculant la résolution (Rs) à partir du paramètre LB auquel on peut éventuellement substituer le paramètre LP.

Un tel résultat ne peut être obtenu à l'aide de la détection conductimétrique dont l'amplitude du signal correspond à la somme des conductivités individuelles de tous les isotopes d'une espèce chargée détectée, ce qui ne permet pas d'identifier directement ces isotopes ou de les quantifier avec précision.

Par ailleurs, comme indiqué précédemment, lorsque l'on applique une faible intensité de courant au cours de l'isotachophorèse, sa durée est augmentée sans que cela n'affecte la qualité de la séparation.

Grâce à l'extrême sensibilité et l'étendue de la linéarité du signal sur plusieurs ordres de grandeur de la détection par spectrométrie ICPMS, ceci permet d'élargir la bande de détection ICPMS, et donc d'augmenter encore la stabilité et la précision de la mesure isotopique à partir de cette bande.

### 3.2. Analyse de la solution 2 (4 lanthanides de concentrations différentes avec matrice chargée).

À titre d'expérience complémentaire, on prépare la solution 2 en ajoutant à la solution 1 différents éléments sous forme ionique selon les proportions indiquées dans le Tableau F, afin de simuler un échantillon réel comprenant une matrice chargée telle que celle d'un combustible nucléaire reconstitué de type UOx. La somme des éléments représente une concentration totale de 280ppm.

La solution 2 est analysée dans les mêmes conditions que la solution 1, si ce n'est que les isotopes mesurés sont en partie différents (146Nd, 149Sm, 151Eu, 157Gd).

Les résultats sont représentés sur la Figure 4 dans laquelle une translation du spectre ICPMS est effectuée comme précédemment.

Ils montrent que la présence de cette matrice n'affecte pas la détection par spectrométrie ICPMS, alors que la détection conductimétrique crée des artefacts (repère A) et ne permet pas de détecter les espèces peu concentrées telles que le $^{155}$Gd (repère B).

Tableau F

| élément | abondance massique |
|---------|--------------------|
| Se | 0,15% |
| Rb | 0,91% |
| Sr | 2,11% |
| Y | 1,18% |
| Zr | 9,85% |
| Mo | 9,72% |
| Ru | 7,17% |
| Rh | 1,07% |
| Pd | 5,25% |
| Ag | 0,23% |
| Cd | 0,41% |
| In | 0,00% |
| Sn | 0,24% |
| Sb | 0,06% |
| Cs | 7,01% |
| Ba | 5,10% |
| La | 3,42% |

(suite)

| élément | abondance massique |
|---------|--------------------|
| Ce | 6,82% |
| Pr | 3,15% |
| Nd | 11,60% |
| Sm | 2,14% |
| Eu | 0,51% |
| Gd | 0,68% |
| Tb | 0,01% |
| Dy | 0,01% |
| Ho | 0,00% |

### 3.3. <u>Analyse de la solution 3 (mélange de Nd et Sm ).</u>

On prépare une solution 3 en mélangeant un volume équivalent d'une solution 10000 mg/g de Nd et d'une solution 10000 mg/g de Sm qui comprennent les différents isotopes de ces lanthanides selon leur abondance isotopique naturelle.

Après application du traitement préparatoire décrit précédemment, la solution 3 est dégazée sous ultrason, filtrée sur cellulose (0,2 $\mu$m), puis diluée afin que chacun des lanthanides Nd et Sm soient présents à une concentration de 6250 $\mu$g/g.

Un volume de 80 nL de la solution 3 correspondant à une quantité de 5ng par lanthanide est injecté dans un dispositif d'électrophorèse capillaire consistant en un microsystème fluidique (modèle CE Chip T8050 commercialisé par la société Micronit, comportant des canaux de 50 $\mu$m de large et 20 $\mu$m de profondeur et une distance modifiée entre les deux T de 80 mm au lieu de 0,1 mm proposé de façon standard) relié par couplage direct au spectromètre ICPMS-MC via le nébuliseur.

Le capillaire contenu dans le microsystème fluidique présente une longueur totale de 100 cm qui correspond à la longueur de séparation, car le microsystème fluidique ne comportant pas de capteur conductimétrique, la séparation se poursuit jusqu'à l'extrémité de sortie du capillaire qui débouche dans le nébuliseur.

Après séparation de Sm et Nd par isotachophorèse, on effectue une mesure sur certains isotopes de ces lanthanides (142Nd, 143Nd, 144Nd et 144Sm, 145Nd, 146Nd, 147Sm, 148Nd et 148Sm, 149Sm, 150Nd et 150Sm).

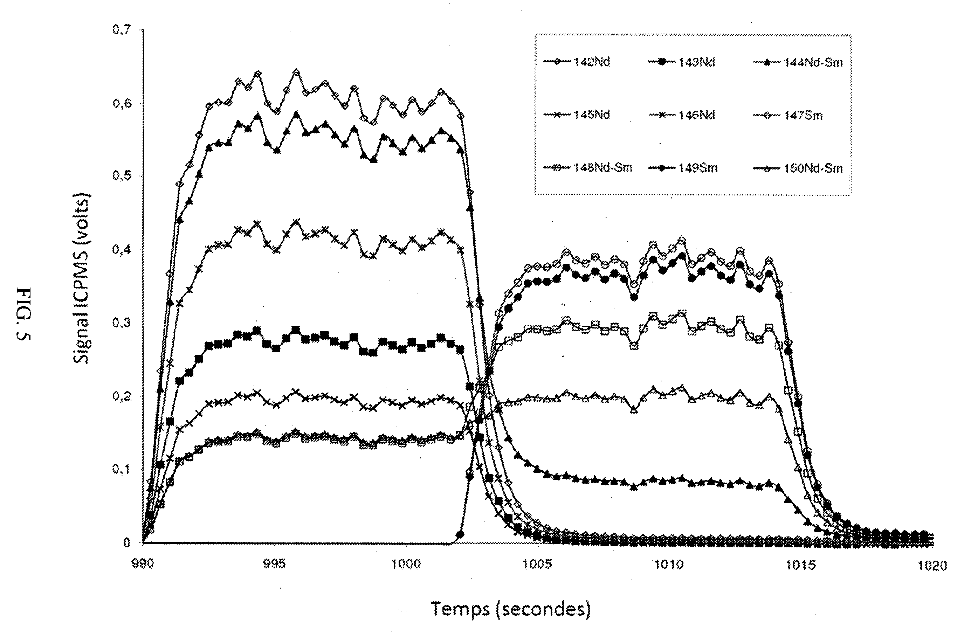

Les résultats obtenus sont reproduits sur la Figure 5, dans laquelle on visualise parfaitement les zones de diffusion et les bandes spécifiques aux isotopes du Nd (entre 990 et 1002 secondes) et du Sm (entre 1006 et 1014 secondes). L'amplitude de chaque bande est proportionnelle à l'abondance isotopique naturelle de l'isotope mesuré.

Cette séparation de Nd et Sm permet de résoudre les interférences isobariques (masses 144, 148 et 150) et ainsi d'effectuer précisément la mesure isotopique.

De nombreux points de mesure par ICPMS sont effectués malgré le faible volume injecté.

La reproductibilité obtenue est de quelques pour milles, ce qui est comparable aux résultats pouvant être atteints lors d'une mesure isotopique par couplage indirect.

**Revendications**

1.  Procédé de mesure isotopique d'espèces chargées contenues dans une solution à analyser, lesdites espèces comprenant des cations minéraux, des anions minéraux, des composés organométalliques, ou leurs mélanges, au moins deux desdites espèces présentant au moins une interférence isobarique telle que la différence de masse atomique entre lesdites espèces est comprise entre 0,001 et 0,9 unités de masse atomique, le procédé comprenant les étapes successives suivantes :

    a) dans le capillaire d'un dispositif d'électrophorèse capillaire, on intercale de façon contiguë la solution à analyser entre un électrolyte terminal et un électrolyte leader qui, respectivement, sont placés après l'entrée et avant la sortie du capillaire et contiennent des ions de même charge mais de mobilité inférieure et supérieure à celles desdites espèces ;

b) on sépare lesdites espèces en utilisant le dispositif d'électrophorèse capillaire selon le mode isotachophorèse, puis ;

c) dans la continuité de l'étape précédente, on effectue une mesure isotopique desdites espèces détectées sous forme d'un signal d'amplitude sensiblement constante à l'aide d'un spectromètre de masse couplé à un plasma inductif (ICPMS) relié par couplage direct avec le dispositif d'électrophorèse capillaire.

2. Procédé de mesure isotopique selon la revendication 1, dans lequel l'isotachophorèse est réalisée en appliquant un courant d'une intensité comprise entre 0,1 $\mu$A et 10 $\mu$A.

3. Procédé de mesure isotopique selon la revendication 1 ou 2, dans lequel la mesure isotopique comprend une dilution isotopique.

4. Procédé de mesure isotopique selon la revendication 1 ou 2, dans lequel la mesure isotopique consiste à déterminer les abondances isotopiques des différents isotopes d'une même espèce.

5. Procédé de mesure isotopique selon l'une quelconque des revendications précédentes, dans lequel l'électrolyte leader et/ou terminal est une solution aqueuse d'un composé comprenant les éléments carbone, hydrogène et oxygène.

6. Procédé de mesure isotopique selon l'une quelconque des revendications précédentes, dans lequel l'électrolyte terminal est un composé zwitérionique.

7. Procédé de mesure isotopique selon l'une quelconque des revendications précédentes, dans lequel le capillaire contient un agent complexant destiné à former un complexe avec tout ou partie desdites espèces au cours de l'isotachophorèse.

8. Procédé de mesure isotopique selon la revendication 7, dans lequel l'agent complexant est choisi parmi l'acide 2-hydroxy-2-methylbutyrique (HMBA), l'acide hydroxyisobutyrique (HIBA), l'acide éthylènediamine tétraacétique (EDTA), l'acide pyridine-2,6-dicarboxylique (PDCA), l'acide lactique, l'acide tartrique, l'acide oxalique, l'acide maléique, l'acide isobutyrique ou leurs mélanges.

9. Procédé de mesure isotopique selon la revendication 7 ou 8, dans lequel on ajoute un agent assistant à l'agent complexant.

10. Procédé de mesure isotopique selon la revendication 9, dans lequel l'agent assistant est choisi parmi l'acide diglycolique, l'acide malonique, l'acide tartrique, l'acide maléique, l'acide formique, l'acide citrique, l'acide acétique, ou leurs mélanges.

11. Procédé de mesure isotopique l'une quelconque des revendications 7 à 10, dans lequel l'agent complexant et/ou l'agent assistant est contenu dans l'électrolyte leader.

12. Procédé de mesure isotopique selon l'une quelconque des revendications précédentes, dans lequel le dispositif d'électrophorèse capillaire est en tout ou partie implanté sur un microsystème fluidique.

13. Procédé de mesure isotopique selon l'une quelconque des revendications précédentes, dans lequel le dispositif d'électrophorèse capillaire et le spectromètre ICPMS sont reliés par couplage direct via un système permettant de générer des gouttes.

14. Procédé de mesure isotopique selon l'une quelconque des revendications précédentes, dans lequel le spectromètre ICPMS est de type multi collection.

15. Procédé de mesure isotopique selon l'une quelconque des revendications précédentes, dans lequel lesdites espèces sont des métaux de transition, alcalin, alcalino-terreux, des lanthanides et/ou des actinides.

**Patentansprüche**

1. Verfahren zur Isotopenmessung geladener Spezies, die in einer zu analysierenden Lösung enthalten sind, wobei die Spezies mineralische Kationen, mineralische Anionen, organometallische Verbindungen oder ihre Gemische umfassen, wobei mindesten zwei dieser Spezies mindestens eine isobare Interferenz derart aufweisen, dass die Atommassendifferenz zwischen 0,001 und 0,9 Einheiten Atommasse inklusive ist, wobei das Verfahren die folgenden aufeinanderfolgenden Schritte umfasst:

a) benachbartes Platzieren, in die Kapillare einer Kapillarelektrophoresevorrichtung, der zu analysierenden Lösung zwischen ein Terminating Elektrolyt und ein Leading Elektrolyt, die jeweils nach dem Eingang und vor dem Ausgang der Kapillare platziert sind und Ionen derselben Ladung, aber geringerer und höherer Mobilität als die der Spezies enthalten,

b) Trennen der Spezies durch Verwendung der Kapillarelektrophoresevorrichtung gemäß dem Isotachophoresemodus, danach

c) Durchführen, in der Kontinuität des vorherigen Schritts, einer Isotopenmessung der ermittelten Spezies in Form eines etwa konstanten Amplitudensignals mit Hilfe eines Massenspektrometers, das an ein induktives Plasma (ICPMS) gekoppelt ist, verbunden durch direkte Kopplung mit der Kapillarelektrophoresevorrichtung.

2. Verfahren zur Isotopenmessung nach Anspruch 1, wobei die Isotachophorese durch Anlegen eines Stroms einer Stärke zwischen 0,1 µA und 10 µA inklusive durchgeführt wird.

3. Verfahren zur Isotopenmessung nach Anspruch 1 oder 2, wobei die Isotopenmessung eine isotopische Verdünnung umfasst.

4. Verfahren zur Isotopenmessung nach Anspruch 1 oder 2, wobei die Isotopenmessung darin besteht, die Isotopenhäufigkeit der verschiedenen Isotope derselben Spezies zu bestimmen.

5. Verfahren zur Isotopenmessung nach einem der vorangehenden Ansprüche, wobei der Leading- und/oder Terminating Elektrolyt eine wässrige Lösung einer Verbindung ist, die die Elemente Kohlenstoff, Wasserstoff und Sauerstoff umfasst.

6. Verfahren zur Isotopenmessung nach einem der vorangehenden Ansprüche, wobei der Terminating Elektrolyt eine Zwitterionverbindung ist.

7. Verfahren zur Isotopenmessung nach einem der vorangehenden Ansprüche, wobei die Kapillare ein komplexierendes Mittel enthält, das dazu bestimmt ist, während der Isotachophorese mit allen oder einem Teil der Spezies einen Komplex zu bilden.

8. Verfahren zur Isotopenmessung nach Anspruch 7, wobei das komplexierende Mittel aus der 2-Hydroxy-2-methylbutylsäure (HMBA), der Hydroxyisobutylsäure (HIBA), Ethylendiamintetraessigsäure (EDTA), der Pyridin-2,6-dicarboxylsäure (PDCA), der Milchsäure, der Weinsäure, Oxalsäure, der Maleinsäure, der Isobuttersäure oder ihren Gemischen ausgewählt ist.

9. Verfahren zur Isotopenmessung nach Anspruch 7 oder 8, wobei dem komplexierenden Mittel ein Assistenzmittel hinzugefügt wird.

10. Verfahren zur Isotopenmessung nach Anspruch 9, wobei das Assistenzmittel aus der Diglycolsäure, der Malonsäure, der Weinsäure, der Maleinsäure, der Ameisensäure, der Citronensäure, der Essigsäure oder ihren Gemischen ausgewählt ist.

11. Verfahren zur Isotopenmessung nach einem der Ansprüche 7 bis 10, wobei das komplexierende Mittel und/oder das Assistenzmittel im Leading Elektrolyt enthalten ist.

12. Verfahren zur Isotopenmessung nach einem der vorangehenden Ansprüche, wobei die Kapillarelektrophoresevorrichtung ganz oder teilweise in ein Fluid-Mikrosystem integriert ist.

13. Verfahren zur Isotopenmessung nach einem der vorangehenden Ansprüche, wobei die Kapillarelektrophoresevorrichtung und das ICPMS-Spektrometer mittels direkter Kopplung über ein System verbunden sind, das die Verwaltung der Tropfen erlaubt.

14. Verfahren zur Isotopenmessung nach einem der vorangehenden Ansprüche, wobei das ICPMS-Spektrometer vom Multikollektionstyp ist.

15. Verfahren zur Isotopenmessung nach einem der vorangehenden Ansprüche, wobei die Spezies Übergangsmetalle, Alkalimetalle, Erdalkalimetalle, Seltenerdmetalle und/oder Aktinide sind.

**Claims**

1. Method for isotope measurement of charged species contained in a solution to be analyzed, in which said species comprise inorganic cations, inorganic anions, organometallic compounds, or mixtures thereof, at least two of said species having at least one isobaric interference so that the difference in atomic mass between said species is between 0.001 and 0.9 atomic mass units, the method comprising the following consecutive steps:

a) in the capillary of a capillary electrophoresis device, inserting contiguously the solution to be analyzed between a terminating electrolyte and a leading electrolyte that, respectively, are placed after the inlet and before the outlet of the capillary and contain ions of the same charge but with mobility inferior and superior to those of said species;
b) separating said species by using the capillary electrophoresis device according to the isotachophoresis mode, then;
c) in the continuity of the preceding step, performing an isotope measurement of said species detected in the form of a substantially constant amplitude signal by using an inductively coupled plasma mass spectrometer (ICPMS) connected by direct coupling with the capillary electrophoresis device.

2. Method for isotope measurement according to claim 1, wherein the isotachophoresis is performed by applying a current with an intensity of between 0.1 μA and 10 μA.

3. Method for isotope measurement according to claim 1 or 2, wherein the isotope measurement comprises an isotope dilution.

4. Method for isotope measurement according to claim 1 or 2, wherein the isotope measurement consists of determining the isotopic abundances of the different isotopes of the same species.

5. Method for isotope measurement according to any one of the preceding claims, wherein the leading and/or terminating electrolyte is an aqueous solution of a compound comprising the elements carbon, hydrogen and oxygen.

6. Method for isotope measurement according to any one of the preceding claims, wherein the terminating electrolyte is a zwitterionic compound.

7. Method for isotope measurement according to any one of the preceding claims, wherein the capillary contains a complexing agent intended to form a complex with all or some of said species during the isotachophoresis.

8. Method for isotope measurement according to claim 7, wherein the complexing agent is chosen from 2-hydroxy-2-methyl butyric acid (HMBA), hydroxyisobutyric acid (HIBA), ethylenediaminetetraacetic acid (EDTA), pyridine-2,6-dicarboxylic acid (PDCA), lactic acid, tartric acid, oxalic acid, maleic acid, isobutyric acid or mixtures thereof.

9. Method for isotope measurement according to claim 7 or 8, wherein an assisting agent is added to the complexing agent.

10. Method for isotope measurement according to claim 9, wherein the assisting agent is chosen from diglycolic acid, malonic acid, tartric acid, maleic acid, formic acid, citric acid, acetic acid, or mixtures thereof.

11. Method for isotope measurement according to any one of claims 7 to 10, wherein the complexing agent and/or the assisting agent is contained in the leading electrolyte.

12. Method for isotope measurement according to any one of the preceding claims, wherein the capillary electrophoresis device is entirely or partially implanted on a fluidic microsystem.

13. Method for isotope measurement according to any one of the preceding claims, wherein the capillary electrophoresis device and the ICPMS spectrometer are connected by direct coupling via a system enabling drops to be generated.

14. Method for isotope measurement according to any one of the preceding claims, wherein the ICPMS spectrometer is of the multi-collection type.

15. Method for isotope measurement according to any one of the preceding claims, wherein said species are transition, alkaline or alkaline earth metals, lanthanides and/or actinides.

FIG. 1

FIG. 2

FIG. 3

FIG. 4

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **PITOIS A. et al.** *International Journal Of Mass Spectrometry,* 2008, vol. 270, 118-126
- **G. REVEL.** Méthodes d'analyses radiochimiques et isotopiques. *fascicule,* 2595
- **MICHALKE B.** *Electrophoresis,* 2005, vol. 26 (7-8), 1584-1597